# NOUVEAU FASCICULE DE BREVET EUROPEEN

(11) **EP 0 323 347 B2**
(45) Date de publication et mention de la décision concernant l'opposition: **17.07.1996**
(45) Mention de la délivrance du brevet: 10.06.1992
(21) Numéro de dépôt: 88403333.3
(22) Date de dépôt: 27.12.1988
(51) Int. Cl.: G06K 7/06

(54) **Dispositif de lecture/écriture pour cartes à mémoire muni d'un dispositif anti fraude**
Lese-/Schreibeinrichtung für Speicherkarte mit einer Vorrichtung gegen Betrug
Reading/writing device for memory cards with an anti-fraud device

(30) Priorité: 28.12.1987 FR 8718227
(43) Date de publication de la demande: 05.07.1989
(73) Titulaire: SCHLUMBERGER INDUSTRIES, F-92120 Montrouge (FR)
(72) Inventeur: Gervais, Michel, 94-240 L'Hay les Roses (FR)
(74) Mandataire: Hasenrader, Hubert

(56) Documents cités:
- DE-A- 2 738 113
- FR-A- 2 554 262
- US-A- 4 105 156
- "Vorlesungen über Physik", Feyman et al., 1974, drap. 23 et 24
- "Classical Electrodynamics" Jackson, 1975, pages 48 et 49

## Description

La présente invention a pour objet un dispositif de lecture/écriture pour cartes à mémoire muni d'un dispositif anti-fraude.

Les systèmes de fourniture de prestations par cartes à mémoire électronique comprennent des cartes détenues par les utilisateurs et des dispositifs de lecture/écriture associés aux machines de fourniture de prestations. Pour obtenir une prestation, l'utilisateur doit introduire sa carte dans le dispositif de lecture/écriture pour que ce dernier vérifie que la carte donne bien droit à la fourniture de la prestation considérée et modifie le solde contenu dans la carte en fonction du montant de la prestation fournie. Dans certains cas le lecteur servira également à vérifier que le détenteur de la carte en est le légitime propriétaire.

Les cartes à mémoire sont du type pré-payé c'est-à-dire que pour obtenir le droit d'utiliser sa carte l'usager doit d'abord acquitter auprès de l'organisme prestataire du service un montant au moins égal au montant des prestations autorisées par la carte. Il est donc tentant pour un fraudeur de réaliser une carte ayant les mêmes circuits électroniques qu'une vraie carte, et contenant les mêmes informations et/ou programmes qu'une vraie carte.

S'il est possible à partir d'une vraie carte de déterminer les caractéristiques géométriques de celle-ci et d'identifier la nature du circuit qu'elle contient, il est en revanche impossible ou quasiment impossible, à partir de cette carte de déterminer les informations et les programmes contenus dans les circuits et surtout l'évolution de ces informations dans les phases d'utilisation de la carte en raison du dialogue qui s'instaure entre le dispositif de lecture/écriture et le circuit de la carte.

Une façon pour un fraudeur de résoudre ce problème consiste à intervenir directement au niveau du dispositif de lecture/écriture. Pour cela on introduit dans le dispositif de lecture/écriture une carte "factice" qui a la même géométrie et les mêmes contacts externes qu'une vraie carte, mais dans laquelle le circuit est remplacé par des fils conducteurs noyés dans le corps de carte reliés aux contacts externes de la carte et qui sortent du dispositif de lecture/écriture. Il est alors possible de relier les deuxièmes extrémités de ces fils à des moyens puissants de traitement d'informations capables de recueillir et analyser les signaux électriques émis par le dispositif de lecture/écriture et de simuler les signaux émis normalement par la carte jusqu'à ce que la totalité des échanges d'informations soit reconstituée.

Pour remédier à cette possibilité de fraude, on a déjà proposé dans le brevet français 2.554262 délivré le 18 mai 1987 et qui décrit les caractéristiques définies dans le préambule de la revendication 1, de munir le dispositif de lecture de moyens de détection de la présence du fil conducteur parasite introduit dans le dispositif de lecture/écriture.

La présente invention a pour objet un mode perfectionné de réalisation d'un dispositif de lecture/écriture muni d'un tel dispositif de détection.

Selon l'invention le dispositif de lecture/écriture comprend un circuit de traitement, une fente d'introduction de cartes, une tête de connexion comprenant au moins un élément de connexion pour relier électriquement le circuit de ladite carte audit circuit de traitement lorsque ladite carte est en position de traitement, des moyens de guidage de ladite carte entre la fente d'introduction et ladite position de traitement, et des moyens de détection d'un fil conducteur étranger introduit dans ledit dispositif, relié électriquement audit connecteur et comprenant un élément conducteur disposé sensiblement parallèlement à la direction d'introduction des cartes entre ladite fente et ladite tête de connexion pour intercepter tout chemin allant de ladite fente à ladite tête de connexion , et un circuit électrique établi entre au moins un élément de contact de ladite tête de connexion et ledit élément conducteur, ledit circuit comprenant un générateur de signaux alternatifs ; et un détecteur pour détecter en un point dudit circuit l'apparition d'un signal alternatif, ledit dispositif est caractérisé en ce que le signal alternatif apparait sous l'effet du couplage capacitif entre ledit élément conducteur et un fil conducteur étranger s'étendant en regard dudit élément conducteur avec ledit générateur de signaux alternatif délivrant un signal dont la fréquence est de l'ordre de 50 à 100 kHz.

Ainsi dès qu'un fil conducteur étranger a été introduit frauduleusement dans le dispositif de lecture/écriture il s'établit un couplage capacitif entre l'élément conducteur de détection, par exemple une plaque de détection, et le fil conducteur qui est électriquement relié à la tête de connexion. Le circuit de détection est alors fermé par la capacité constituée par la plaque et le fil conducteur. Le fil peut donc être détecté même s'il est blindé et même s'il ne circule pas de courant dans ce fil.

D'autres caractéristiques et avantages de l'invention apparaîtront plus clairement à la lecture de la description qui suit de plusieurs modes de réalisation de l'invention donnés à titre d'exemples non limitatifs. La description se réfère au dessin annexé sur lequel :
La figure 1 montre en coupe verticale un dispositif de lecture/écriture selon l'invention ;
La figure 2 montre un premier mode d'implantation de la plaque conductrice du détecteur ;
La figure 3 montre un deuxième mode d'implantation de la plaque conductrice du détecteur ;et
La figure 4 est un schéma d'un premier mode de réalisation du circuit électrique du détecteur.

Dans la suite de la description on appelera par simplification "lecteur", le dispositif de lecture/écriture de cartes. En d'autres termes, le "lecteur" peut soit lire et écrire des informations dans la carte, soit effectuer une seule de ces deux opérations.

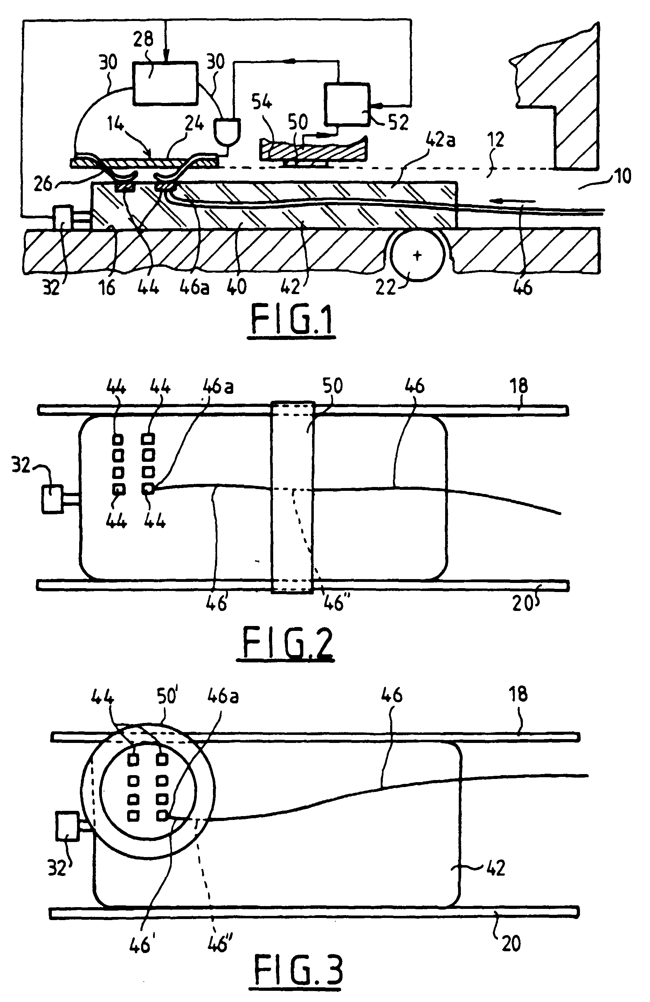

La figure 1 montre l'ensemble d'un lecteur muni d'un dispositif de détection de fils conducteurs étrangers ou frauduleux. Le lecteur comprend une fente d'introduction 10 de la carte, un couloir de guidage 12 de la carte et une tête de connexion 14. Le couloir de guidage est limité par un plancher 16 et par deux parois latérales 18 et 20 visibles sur les figures 2 et 3. Le lecteur peut également comporter un système d'entraînement 22 de la carte pour amener automatiquement celle-ci en position de traitement c'est à dire en contact avec la tête de connexion 14. La tête de connexion 14 comprend essentiellement un support isolant 24 et des lames conductrices flexibles 26 formant les éléments de contact. Les lames conductrices 26 son reliées à un circuit de traitement 28 par des conducteurs 30.

Le lecteur comprend également un micro-contact 32 ou similaire qui délivre un signal transmis au circuit de traitement 28 lorsque la carte est en position de traitement.

On a également représenté sur la figure 1 une carte "factice" 40 utilisée pour effectuer une tentative de fraude. La carte comprend un corps 42 identique au corps d'une vraie carte et des plages externes de contact électrique 44 qui occupent sur la face supérieure 42a du corps de carte les mêmes positions que les plages d'une vraie carte. On a aussi fait figurer un fil conducteur 46 dont l'extrémité 46a est reliée à une plage 44, le fil 46 étant noyé dans le corps de carte 42 et sortant du lecteur par la fente d'introduction 10. L'autre extrémité du conducteur 46 peut être reliée à un système de traitement. La carte factice 40 pourrait comporter autant de conducteurs 46 qu'il y a de plages de contact 44.

Le lecteur comporte également un dispositif de détection de fils conducteurs frauduleux (fils 46) qui est représenté schématiquement sur les figures 1 et 2. Le dispositif de détection comprend essentiellement une plaque conductrice 50 et un circuit de détection 52. La plaque 50 est fixée sur un élement support 54 du lecteur.

Comme le montre mieux la figure 2, la plaque 50 s'étend sur toute la largeur du couloir de guidage 12, c'est-à-dire depuis sa première paroi latérale 18 jusqu'à sa deuxième paroi latérale 20. Ainsi tout chemin allant de la fente d'introduction 10 à la tête de connexion 14 est intercepté par la plaque 50. En d'autres termes, tout fil conducteur introduit dans le passage de guidage 12 et raccordé à la tête de connexion passe en regard de la plaque 50.

La figure 3 montre une autre forme possible de la plaque conductrice. La plaque conductrice 50' a la forme d'une couronne qui entoure totalement l'ensemble des contacts électriques 26 de la tête de connexion 14. La plaque 50' est dimensionnée de telle manière qu'il n'y ait en regard d'elle aucun élément conducteur de la tête de connexion et que, lorsqu'une carte est en position de traitement, aucun élément conducteur de la carte ne soit en regard de la plaque 50. On comprend que dans le cas de la figure 3 la plaque 50' intercepte également tous les chemins allant de la fente d'introduction 10 à la tête de connexion 14.

Un circuit de détection 52 est monté entre la plaque 50 ou 50' et le circuit de traitement 26 du lecteur. Le circuit 52 comprend essentiellement un générateur de signaux électriques alternatifs et un détecteur de signaux alternatifs.

En l'absence d'un fil conducteur 46 connecté à l'une des lames conductrices 26 et s'étendant en regard de la plaque de détection 50 ou 50' le circuit 52 est ouvert et aucun signal alternatif n'est détecté. Au contraire lorsqu'un fil conducteur 46 est Introduit dans le passage de guidage 12, le circuit 52 est fermé par le condensateur constitué par la plaque 50, 50' et la portion de fils conducteur 46" qui s'étend de la portion 46' à l'extrémité de ce fils reliée à la lame conductrice 26. Lorsqu'un signal alternatif est détecté, le circuit 52 émet sur sa sortie 60 un signal d'alarme AL Le signal AL peut être appliqué à l'entrée de commande d'une porte 61 interrompant la liaison entre les lames conductrices 26 et circuit de traitement 28 du lecteur.

Une carte à mémoire normale comporte un module électronique dont certaines parties sont métalliques. Cependant lors de l'introduction de la carte dans le lecteur ces parties métalliques ne risquent pas de déclencher le dispositif de détection. En effet lorsque ces parties métalliques passent en regard de la plaque de détection 50, 50' elles ne sont pas encore reliées à la tête de connexion 14, et lorsque ces parties métalliques de la carte sont reliées à la tête de connexion 14, elles ne sont plus en regard de la plaque de détection 50, 50'.

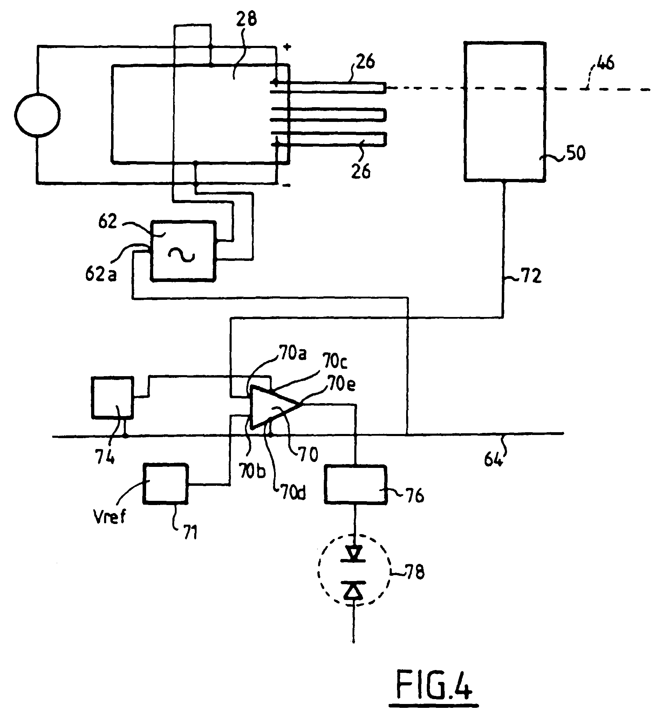

En se référant à la figure 4, on va décrire un mode de réalisation du circuit de détection 52. Sur la figure 4 on a représenté de façon simplifiée le circuit de traitement 28 du lecteur et 3 contacts électriques 26. On a également représenté la source 60 d'alimentation électrique du circuit 28. Le circuit de détection 52 comprend un oscillateur 62 qui est alimenté entre les bornes + et - du circuit de traitement 28. L'oscillateur 62 délivre un signal à une fréquence de 70 kHz. La sortie 62a de l'oscillateur 62 est reliée à la ligne 64. Le circuit de détection 52 comprend également un comparateur 70 qui est un amplificateur opérationnel. Son entrée 70a est reliée à la plaque conductrice 50 par le conducteur 72 . Son entrée 70b reçoit une tension de référence V_{ref} délivrée par le générateur de tension 71 Le comparateur 70 est alimenté par une source autonome 74 dont les sorties sont reliées respectivement à la ligne 64 et à la borne 70c d'alimentation du comparateur 70. La borne de sortie 70e du comparateur est reliée à un circuit de filtrage 76 qui est lui-même relié à un coupleur optique 78 dont la sortie délivre le signal d'alarme AL.La ligne 64 est la ligne de masse pour le détecteur 70 et pour l'alimentation 64. Elle est flottante par rapport à la ligne de masse du circuit de traitement 28 du lecteur.

Le dispositif de détection fonctionne de la manière suivante : En l'absence d'objet conducteur dans le couloir d'introduction 12 du lecteur le circuit électrique alimenté par l'oscillateur 62 est ouvert puisqu'il n'y a aucune liaison conductrice entre un des contacts électriques 28 et la plaque conductrice 50. Lorsqu'on introduit une carte normale dans le couloir 12, c'est à dire une carte dépourvue de fil frauduleux, le circuit reste ouvert. En effet lorsque les plages de contact de la carte passent en regard de la plaque 50, ces plages de contact ne sont pas encore reliées électriquement aux éléments de contact 26. Lorsque la carte arrive en position de traitement, il n'y a plus de parties conductrices de la carte en regard de la plaque 50.

En revanche, lorsqu'on introduit une carte frauduleuse dans le lecteur, le fil conducteur de cette carte a une extrémité qui est reliée électriquement à l'un des contacts 26 du lecteur et une portion du fil est nécessairement en regard de la plaque 50. Le circuit électrique constitué par le circuit de traitement 28 avec ses lames flexibles 26, l'oscillateur 62, et le détecteur 70 est donc fermé par couplage capacitif entre le fil conducteur frauduleux et la plaque 50. il circule donc dans ce circuit un courant alternatif. En conséquence une tension alternative est appliquée à l'entrée 70a du détecteur 70. Celui-ci délivre un signal sur sa sortie 70e. Ce signal est traité par le filtre 76 et transmis au circuit d'alarme via le coupleur optique 78.

On voit de plus que le detecteur 70 a sa propre source d'alimentation 74 qui est flottante par rapport à l'alimentation 60 du circuit de traitement 28. En l'absence de fil frauduleux la seule liaison électrique entre l'ensemble de détection (détecteur 70 et alimentation 74) est constituée par l'oscillateur 62. De ce fait aucun signal alternatif n'est appliqué aux lames flexibles 26. En outre, du fait que le détecteur 70 et le circuit de traitement 28 ont des lignes de masse différentes, on peut détecter la présence d'un fil frauduleux même s'il est connecté à la lame flexible correspondant à la masse.

On comprend que la détection du fil frauduleux est réalisée même en l'absence de circulation de courant dans celui-ci. Il en va encore de même si le fraudeur prend la précaution de blinder le fil. En effet, si le blindage est flottant par rapport au circuit d'exploitation monté à l'extrémité libre du fil frauduleux, le couplage capacitif entre le fil et la plaque est encore augmenté. Si le blindage est connecté au circuit d'exploitation, le couplage se produit entre le blindage et la plaque, le blindage étant relié à la lame flexible via le circuit d'exploitation et le fil parasite.

En outre le circuit de détection 52 n'est physiquement relié qu'à une seule lame conductrice 26. Cependant, comme le circuit 28 du lecteur établit des connexions internes entre les différentes lames, la mise en contact d'un fil conducteur avec n'importe quelle lame élastique pourra être détectée.

## Revendications

1. Dispositif de lecture/écriture pour cartes à mémoire électronique comprenant un circuit de traitement (28), une fente d'introduction de cartes (10), une tête de connexion (14) comprenant au moins un élément de connexion (26) pour relier électriquement le circuit de ladite carte audit circuit de traitement lorsque ladite carte est en position de traitement, des moyens de guidage de ladite carte entre la fente d'introduction (10) et ladite position de traitement, et des moyens de détection d'un fil conducteur étranger (46) introduit dans ledit dispositif, et relié électriquement audit élément de connexion (26), lesdits moyens de détection comprenant un élément conducteur (50, 50') disposé sensiblement parallèlement à la direction d'introduction des cartes entre ladite fente (10) et ladite tête de connexion (14) pour intercepter tout chemin allant de ladite fente (10) à ladite tête de connexion (14) et un circuit électrique établi entre au moins un élément de contact (26) de ladite tête de connexion (14) et ledit élément conducteur (46), ledit circuit comprenant un générateur de signaux alternatifs (62), et un détecteur (52) pour détecter en un point dudit circuit l'apparition d'un signal alternatif,
ledit dispositif est caractérisé en ce que le signal alternatif apparaît sous l'effet du couplage capacitif entre ledit élément conducteur (50') et un fil conducteur étranger (46) s'étendant en regard dudit élément conducteur (50) avec ledit générateur de signaux alternatifs délivrant un signal dont la fréquence est de l'ordre de 50 à 100 kHz.

2. Dispositif selon la revendications 1, caractérisé en ce que ledit élément conducteur est une plaque.

3. Dispositif selon l'une quelconque des revendications 1 à 2, caractérisé en ce que ledit circuit de traitement n'est relié au détecteur que par l'intermédiaire dudit générateur de signaux alternatifs.

4. Dispositif selon la revendication 3, caractérisé en ce que ledit détecteur est alimenté par une source d'énergie qui est flottante par rapport audit circuit de traitement.

5. Dispositif selon l'une quelconque des revendications 1 à 4, caractérisé en ce que ledit détecteur comprend des moyens pour élaborer une tension de référence et des moyens pour comparer la tension en un point dudit circuit à ladite tension de référence.

## Claims

1. Read/write device for electronic memory cards comprising a processing circuit (28), a slot (10) for the insertion of cards, a connecting head (14) comprising at least one connecting element (26) for electrically connecting the circuit of the said card to the said processing circuit when the said card is in the processing position, means for guiding the said card between the insertion slot (10) and the said processing position and means for detecting an extraneous conducting wire (46) inserted into the said device and electrically connected to the said connecting element (26), the said detecting means comprising a conducting element (50, 50') disposed substantially parallel to the direction of insertion of the cards between the said slot (10) and the said connecting head (14) in order to intercept any path between the said slot (10) and the said connecting head (14) and an electric circuit established between at least one contact element (26) of the said connecting head (14) and the said conducting element (46), the said circuit comprising an alternating signals generator (62), and a detector (52) for detecting the appearance of an alternating signal at a point of the said circuit, the said device being characterised in that the alternating signal appears as a result of capacitive coupling between the said conducting element (50') and an extraneous conducting wire (46) extending opposite the said conducting element (50) with the said alternating signals generator delivering a signal the frequency of which is approximately 50 to 100 kHz.

2. Device according to claim 1, characterised in that the said conducting element is a plate.

3. Device according to either of claims 1 and 2, characterised in that the said processing circuit is only connected to the detector by means of the said alternating signals generator.

4. Device according to claim 3, characterised in that the said detector is supplied by a power source which is floating with respect to the said processing circuit.

5. Device according to any one of claims 1 to 4, characterised in that the said detector comprises means for establishing a reference voltage and means for comparing the voltage to the said reference voltage at a point of the said circuit.

## Patentansprüche

1. Schreib-/Leseeinrichtung für elektronische Speicherkarten, mit einer Verarbeitungsschaltung (28), einem Karteneinführungsschlitz (10), einem Verbindungskopf (14), der wenigstens ein Verbindungselement (26) aufweist, um die Schaltung der Karte mit der Verarbeitungsschaltung elektrisch zu verbinden, wenn sich die Karte in der Verarbeitungsposition befindet, Führungsmitteln für die Karte zwischen dem Einführungsschlitz (10) und der Verarbeitungsposition und Mitteln für die Erfassung eines fremden Leitungsdrahtes (46), der in die Einrichtung eingeführt und mit dem Verbindungselement (26) verbunden ist, wobei die Erfassungsmittel ein Leiterelement (50, 50'), das im wesentlichen parallel zur Einführungsrichtung der Karten zwischen dem Schlitz (10) und dem Verbindungskopf (14) angeordnet ist, um sämtliche Wege, die zwischen dem Schlitz (10) und dem Verbindungskopf (14) verlaufen, zu überwachen, und einen elektrischen Schaltkreis, der zwischen wenigstens einem Kontaktelement (26) des Verbindungskopfes (14) und dem Leiterelement (46) vorgesehen ist, umfassen, wobei der Schaltkreis einen Wechselsignalgenerator (62) sowie einen Detektor (52) umfaßt, der an einem Punkt im Schaltkreis das Auftreten eines Wechselsignals erfaßt,
wobei die Einrichtung dadurch gekennzeichnet ist, daß das Wechselsignal unter der Wirkung der kapazitiven Kopplung zwischen dem Leiterelement (50') und einem fremden Leitungsdraht (46) auftritt, der sich gegenüber dem Leiterelement (50) erstreckt, wobei der Wechselsignalgenerator ein Signal liefert, dessen Frequenz in der Größenordnung zwischen 50 und 100 kHz liegt.

2. Einrichtung gemäß Anspruch 1, dadurch gekennzeichnet, daß das Leiterelement eine Platte ist.

3. Einrichtung gemäß einem der Ansprüche 1 bis 2, dadurch gekennzeichnet, daß die Verarbeitungsschaltung mit dem Detektor nur über den dazwischengeschalteten Wechselsignalgenerator verbunden ist.

4. Einrichtung gemäß Anspruch 3, dadurch gekennzeichnet, daß der Detektor durch eine Energiequelle versorgt wird, die in bezug auf die Verarbeitungsschaltung schwebend ist.

5. Einrichtung gemäß einem der Ansprüche 1 bis 4, dadurch gekennzeichnet, daß der Detektor Mittel zum Erzeugen einer Referenzspannung und Mittel zum Vergleichen der Spannung an einem bestimmten Punkt im Schaltkreis mit der Referenzspannung aufweist.
